# EUROPEAN PATENT APPLICATION

(11) **EP 4 642 091 A1**
(43) Date of publication of application: **29.10.2025**
(21) Application number: 25169427.9
(22) Date of filing: 09.04.2025
(51) Int. Cl.: H04W 28/086, H04W 84/04, H04W 88/12, H04W 92/12

(54) **PROVIDING RADIO ACCESS NETWORK INTELLIGENT CONTROLLER SERVICE**

(30) Priority: 17.04.2024 FI 20245487
(71) Applicant: Nokia Technologies Oy, 02610 Espoo (FI)
(72) Inventor: Urie, Alistair, 92130 Moulineaux (FR); Bedekar, Anand, Glenview, 60026 (US); Rout, Bivudendu Pratap, 560077 Bangalore (IN); Kadadi, Shivanand, 560065 Bengaluru (IN); Acharya, Abhilash, 560064 Bangalore (IN); Stephens, Paul, Illinois, 60047 (US)
(74) Representative: Richardt Patentanwälte PartG mbB

(57) **Abstract**

Disclosed is a method comprising transmitting (401), from an E2 node (201) to a Near-RT RIC (210), a RIC assistance service request message comprising an indication of a RIC assistance service requested by the E2 node (201) from the Near-RT RIC (210), and receiving (404), by the E2 node from the Near-RT RIC (210), a RIC assistance service response message (403) comprising an indication of provision of the RIC assistance service by an internal application, xApp, and/or a platform service of the Near-RT RIC (210) to the E2 node (201).

## Description

### FIELD

The following example embodiments relate to wireless communication and to providing radio access network intelligent controller (RIC) services.

### BACKGROUND

An E2 node is able to connect to a near-real-time (near-RT) radio access network intelligent controller (RIC) using an E2 interface and expose a list of radio access network (RAN) functions providing RIC services each of which may be specified via their corresponding E2 service models (E2SM).

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to:
transmit, to a near-real-time radio access network intelligent controller, a RIC assistance service request message comprising an indication of a RIC assistance service requested by the apparatus from the near-real-time radio access network intelligent controller; and
receive, from the near-real-time radio access network intelligent controller, a RIC assistance service response message comprising an indication of provision of the RIC assistance service by an internal application, xApp, and/or a platform service of the near-real-time radio access network intelligent controller to the apparatus.

According to another aspect, there is provided an apparatus comprising: means for
transmitting, to a near-real-time radio access network intelligent controller, a RIC assistance service request message comprising an indication of a RIC assistance service requested by the apparatus from the near-real-time radio access network intelligent controller; and
receiving, from the near-real-time radio access network intelligent controller, a RIC assistance service response message comprising an indication of provision of the RIC assistance service by an internal application, xApp, and/or a platform service of the near-real-time radio access network intelligent controller to the apparatus.

According to another aspect, there is provided a method comprising:
transmitting, from an apparatus to a near-real-time radio access network intelligent controller, a RIC assistance service request message comprising an indication of a RIC assistance service requested by the apparatus from the near-real-time radio access network intelligent controller; and
receiving, by the apparatus from the near-real-time radio access network intelligent controller, a RIC assistance service response message comprising an indication of provision of the RIC assistance service by an internal application, xApp, and/or a platform service of the near-real-time radio access network intelligent controller to the apparatus.

According to another aspect, there is provided a computer program comprising instructions which, when executed by an apparatus, cause the apparatus to perform at least the following:
transmit, to a near-real-time radio access network intelligent controller, a RIC assistance service request message comprising an indication of a RIC assistance service requested by the apparatus from the near-real-time radio access network intelligent controller; and
receive, from the near-real-time radio access network intelligent controller, a RIC assistance service response message comprising an indication of provision of the RIC assistance service by an internal application, xApp, and/or a platform service of the near-real-time radio access network intelligent controller to the apparatus.

According to another aspect, there is provided a computer readable medium comprising program instructions which, when executed by an apparatus, cause the apparatus to perform at least the following:
transmit, to a near-real-time radio access network intelligent controller, a RIC assistance service request message comprising an indication of a RIC assistance service requested by the apparatus from the near-real-time radio access network intelligent controller; and
receive, from the near-real-time radio access network intelligent controller, a RIC assistance service response message comprising an indication of provision of the RIC assistance service by an internal application, xApp, and/or a platform service of the near-real-time radio access network intelligent controller to the apparatus.

According to another aspect, there is provided a non-transitory computer readable medium comprising program instructions which, when executed by an apparatus, cause the apparatus to perform at least the following:
transmit, to a near-real-time radio access network intelligent controller, a RIC assistance service request message comprising an indication of a RIC assistance service requested by the apparatus from the near-real-time radio access network intelligent controller; and
receive, from the near-real-time radio access network intelligent controller, a RIC assistance service response message comprising an indication of provision of the RIC assistance service by an internal application, xApp, and/or a platform service of the near-real-time radio access network intelligent controller to the apparatus.

According to another aspect, there is provided an apparatus comprising at least one processor, and at least one memory storing instructions that, when executed by the at least one processor, cause the apparatus at least to:
receive, from an E2 node of a radio access network, a RIC assistance service request message comprising an indication of a RIC assistance service requested by the E2 node;
wherein in case the requested RIC assistance service is supported by the apparatus and available by an internal application, xApp, and/or a platform service of the apparatus, the apparatus is further caused to
transmit, to the E2 node, a RIC assistance service response message comprising an indication of provision of the requested RIC assistance service by the internal application, xApp, and/or the platform service of the apparatus to the E2 node.

According to another aspect, there is provided an apparatus comprising: means for
receiving, from an E2 node of a radio access network, a RIC assistance service request message comprising an indication of a RIC assistance service requested by the E2 node; and
in case the requested RIC assistance service is supported by the apparatus and available by an internal application, xApp, and/or a platform service of the apparatus,
transmitting, to the E2 node, a RIC assistance service response message comprising an indication of provision of the requested RIC assistance service by the internal application, xApp, and/or the platform service of the apparatus to the E2 node.

According to another aspect, there is provided a method comprising:
receiving, from an E2 node of a radio access network, a RIC assistance service request message comprising an indication of a RIC assistance service requested by the E2 node;
wherein in case the requested RIC assistance service is supported by the apparatus and available by an internal application, xApp, and/or a platform service of the apparatus, the method further comprises
transmitting, to the E2 node, a RIC assistance service response message comprising an indication of provision of the requested RIC assistance service by the internal application, xApp, and/or the platform service of the apparatus to the E2 node.

According to another aspect, there is provided a computer program comprising instructions which, when executed by an apparatus, cause the apparatus to perform at least the following:
receive, from an E2 node of a radio access network, a RIC assistance service request message comprising an indication of a RIC assistance service requested by the E2 node;
wherein in case the requested RIC assistance service is supported by the apparatus and available by an internal application, xApp, and/or a platform service of the apparatus, the apparatus is further caused to
transmit, to the E2 node, a RIC assistance service response message comprising an indication of provision of the requested RIC assistance service by the internal application, xApp, and/or the platform service of the apparatus to the E2 node.

According to another aspect, there is provided a computer readable medium comprising program instructions which, when executed by an apparatus, cause the apparatus to perform at least the following:
receive, from an E2 node of a radio access network, a RIC assistance service request message comprising an indication of a RIC assistance service requested by the E2 node;
wherein in case the requested RIC assistance service is supported by the apparatus and available by an internal application, xApp, and/or a platform service of the apparatus, the apparatus is further caused to
transmit, to the E2 node, a RIC assistance service response message comprising an indication of provision of the requested RIC assistance service by the internal application, xApp, and/or the platform service of the apparatus to the E2 node.

According to another aspect, there is provided a non-transitory computer readable medium comprising program instructions which, when executed by an apparatus, cause the apparatus to perform at least the following:
receive, from an E2 node of a radio access network, a RIC assistance service request message comprising an indication of a RIC assistance service requested by the E2 node;
wherein in case the requested RIC assistance service is supported by the apparatus and available by an internal application, xApp, and/or a platform service of the apparatus, the apparatus is further caused to
transmit, to the E2 node, a RIC assistance service response message comprising an indication of provision of the requested RIC assistance service by the internal application, xApp, and/or the platform service of the apparatus to the E2 node.

### LIST OF DRAWINGS

In the following, various example embodiments will be described in greater detail with reference to the accompanying drawings, in which
FIG. 1 illustrates an example of a wireless communication network;
FIGs. 2-3 illustrate exemplary systems;
FIG. 4 illustrates a signal flow diagram;
FIGs. 5-6 illustrate a flow chart;
FIGs. 7-14 illustrate signal flow diagrams;
FIG. 15 illustrates an example of an apparatus; and
FIG. 16 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies (RATs): Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

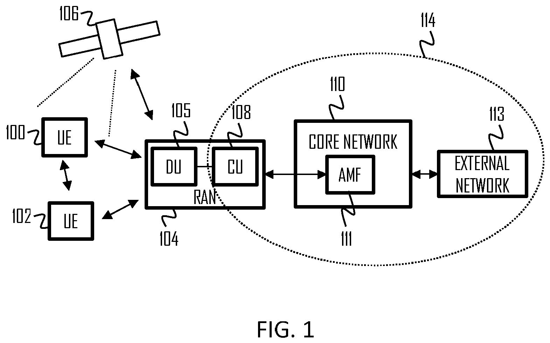

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node. The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bidirectional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: an access and mobility management function (AMF) 111, a user plane function (UPF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

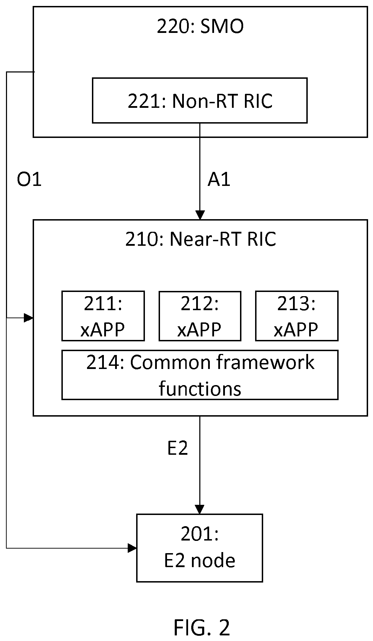

FIG. 2 illustrates an example of a system based on open radio access network (O-RAN) architecture.

The O-RAN architecture comprises two parts: 1) a split architecture part with 5G standalone architecture, each of which is called an E2 node 201, and 2) an automation part that comprises a near-real-time (Near-RT) radio access network intelligent controller (RIC) 210 located within the radio access network, and a non-real-time (Non-RT) RIC 221 located within a network management entity called service management and orchestration (SMO) 220.

The SMO 220 may be connected to the RAN network functions, including the Near-RT RIC 210, via an O1 interface.

The Non-RT RIC 221 (which resides in the SMO 220) performs non-real-time operations. The Non-RT RIC 221 may communicate with the Near-RT RIC 210 through the 01 and/or A1 interface. The Non-RT RIC 221 may be used to control the Near-RT RIC 210. For example, the Non-RT RIC 221 may modify the Near-RT RIC platform 210 and/or the internal applications 211, 212, 213 (xApps) of the Near-RT RIC 210. Furthermore, the Non-RT RIC 221 may monitor, analyze and provide feedback on the state of the Near-RT RIC 210, provide enrichment information, and/or facilitate, train and distribute machine learning models for the previously mentioned tasks.

The Near-RT RIC 210 may communicate with one or more E2 nodes 201 through the E2 interface for time-sensitive near-real-time management and control of radio resources, such as interference management, handover management, Quality of Service (QoS) management, and radio connection management.

An E2 node 201 may be defined as a logical node terminating the E2 interface interfacing with the Near-RT RIC 210. An E2 node may comprise or execute one or more RAN functions. A given RAN described in figure 1 may comprise of one or more E2 nodes each of which may provide one or more RAN Functions that support RIC services using the E2 interface. For example, an E2 node 201 may comprise at least one of: an O-RAN central unit control plane (O-CU-CP), an O-RAN central unit user plane (O-CU-UP), an O-RAN distributed unit (O-DU), and/or an O-RAN eNB (O-eNB). Although only one E2 node 201 is shown in FIG. 2, it should be noted there may also be more than one E2 node connected to the Near-RT RIC 210.

The Near-RT RIC 210 may host one or more xApps 211, 212, 213 and common framework platform functions 214 to support and be used by the xApps 211, 212, 213. Although three xApps 211, 212, 213 are shown in FIG. 2, it should be noted that the number of xApps 211, 212, 213 may also be different than three (i.e., there may be one or more xApps).

A given xAPP 211, 212, 213 may control some RAN function(s) or a part of it. The xApps 211, 212, 213 can also exchange information between them, enabling to build sophisticated use cases leveraging the capabilities of the multiple xApps. An xApp 211, 212, 213 may comprise a descriptor and a software package. The descriptor provides metadata on the xApp related to its version, provider, software package location, management information regarding fault, configuration, accounting, performance and security (FCAPS), and the data types that it takes as input as well as the data types that it produces as output. The software package implements the logic that collects RAN-related information coming from the E2 node(s) 201 and provides optimized and intelligent RAN control decisions.

As mentioned above, the Near-RT RIC 210 supports and manages the xApps 211, 212, 213 by hosting common framework platform functions 214.

As an example, the common framework platform functions 214 may comprise a database, in which the data related to the cell, UEs and bearers can be stored to and fetched from.

As another example, the common framework platform functions 214 may comprise an xApp subscription management function, which manages the xApp requests for RIC subscriptions over the E2 interface, including merging of the subscriptions and united distribution of the data.

As another example, the common framework platform functions 214 may comprise a security function, which provides the security schemes of the xApps 211, 212, 213.

As another example, the common framework platform functions 214 may comprise a conflict mitigation function, which prevents and/or resolves the potential conflicts on the RAN control decisions made by multiple xApps 211, 212, 213.

As another example, the common framework platform functions 214 may comprise messaging infrastructure, which provides internal communication for the Near-RT RIC 210.

As another example, the common framework platform functions 214 may comprise management services, which provide FCAPS management by tracing the transactions, logging information, and collecting metrics to capture, analyze and report the status of the Near-RT RIC 210.

As another example, the common framework platform functions 214 may comprise an interface termination function, which terminates the connections, allows message exchange with the related O-RAN component, and additional functions depending on the needs of the specific interface termination.

As another example, the common framework platform functions 214 may comprise an application programming interface (API) management service, which supports the API registry, discovery, authentication, and event subscriptions.

An E2 interface is established between the Near-RT RIC 210 and a given E2 node 201. Through the E2 interface, the E2 node 201 exposes the supported RIC services that it allows the xApps 211, 212, 213 to monitor and control. The RIC services may be mapped to logical RAN functions on the E2 node 201 and described according to E2 service models (E2SM). The xApps 211, 212, 213 may provide value-added services to the E2 node 201 for the negotiated services.

E2 interface functions may be divided into two categories: 1) RIC services comprising the REPORT, CONTROL, INSERT, POLICY and QUERY services, and 2) RIC support functions, which include interface management and service update procedures. The E2 interface functions may be realized through E2 application protocol (E2AP) procedures. RIC services may be carried by using subscription, indication, control and query E2AP procedures.

The REPORT service may be used by the Near-RT RIC 210 to subscribe to receiving a REPORT indication message from the E2 node 201 upon triggering the event specified in Near-RT RIC's subscription procedure. In other words, with the REPORT service, the E2 node 201 may be configured to report, to the Near-RT RIC 210, information obtained during a specified trigger event. For example, the REPORT service may be used for handover announcement or for reporting measurement information.

The INSERT service may be used by the Near-RT RIC 210 to subscribe to receiving an INSERT indication message from the E2 node 201 upon the specified event trigger. After the event occurrence, the E2 node 201 sends the related INSERT indication message and suspends the associated procedures until a CONTROL message from the Near-RT RIC 210 is received, or until the waiting timer for the CONTROL message arrival expires. For example, the INSERT service may be used for exception handling.

The CONTROL service may be used by the Near-RT RIC 210 via control procedure to initiate a new associated procedure, or to resume or cancel the suspended associated procedures in the E2 node 201. The CONTROL service may be used as a response to INSERT, or it may be used autonomously. For example, the CONTROL service may be used for automatic neighbor relation (ANR) neighbor update.

The POLICY service may be used by the Near-RT RIC 210 to request the E2 node 201 to apply the POLICY after the occurrence of a specific event trigger. Unlike INSERT, POLICY is not dependent on the CONTROL message and does not suspend the associated procedures. In other words, with the POLICY service, the Near-RT RIC 210 may configure the E2 node 201 to modify a response to a specified trigger event within a specified procedure according to a specific policy. For example, the POLICY service may be used for RAN optimization.

The QUERY service may be used by the Near-RT RIC 210 to request information related to the E2 node 201 or to one or more UEs from the E2 node 201.

The RIC support functions provide functionalities and procedures regarding interface management and service update. The interface management functions facilitate E2 Setup, E2 Reset, E2 Node Configuration Update, and RIC Service Update E2AP procedures.

Open-RAN Alliance (O-RAN) has specified the E2 interface between the near-real-time RAN intelligent controller (Near-RT RIC) and the RAN including E2 nodes, as shown in Figure 2.

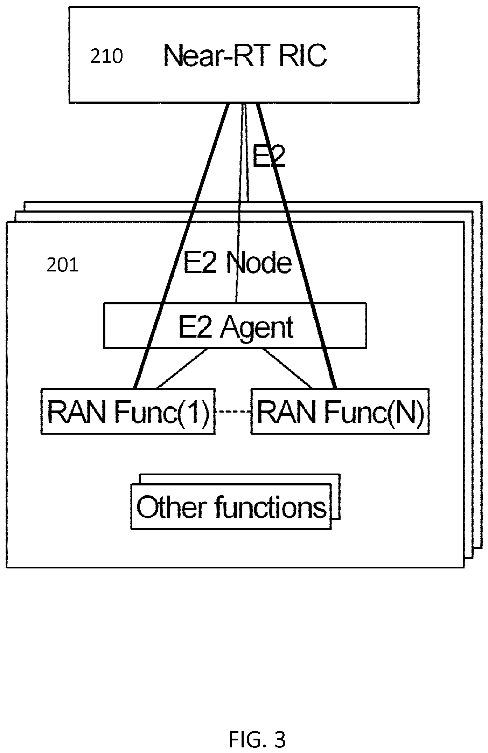

Functionalities exposed by the E2 Node over the E2 interface that may be accessed or manipulated by the Near-RT RIC 210 via RIC services (e.g. report, insert, control, policy and query) may be divided into RAN functions (RAN Func(1) ... RAN Func(N)), as shown in Figure 3. The E2 node 201 is able to connect to the Near-RT RIC 210 using the E2 interface and exposes a list of RAN functions providing RIC services each of which may be specified via their corresponding E2 service models (E2SM). The list of exposed services may be announced during an E2 setup procedure and may be altered using an RIC service update procedure.

The Near-RT RIC 210 may use the following RIC services provided by the E2 node 201:
- REPORT: the Near-RT RIC may use a RIC subscription and/or RIC subscription modification procedures to request that E2 Node sends a REPORT message to the Near-RT RIC, and the associated procedure may continue in the E2 node after each occurrence of a defined RIC subscription procedure event trigger.
- INSERT: the Near-RT RIC may use a RIC subscription and/or RIC subscription modification procedures to request that the E2 node sends an INSERT message to the Near-RT RIC and suspends the associated procedure in the E2 node after each occurrence of a defined RIC subscription procedure event trigger.

- CONTROL: the Near-RT RIC may send a CONTROL message to the E2 node to initiate a new associated procedure or resume a previously suspended associated procedure in the E2 node.
- POLICY: the Near-RT RIC may use a RIC subscription and/or RIC subscription modification procedures to request that the E2 node executes a specific POLICY during functioning of the E2 node after each occurrence of a defined RIC subscription procedure event trigger.
- QUERY: the Near-RT RIC may send a QUERY message to the E2 node to retrieve RAN-related and/or UE-related information from the E2 node.

The current set of RIC services described above are based on an assumption that the Near-RT RIC 210, acting as a service consumer, is using the service produced by the E2 node 201 (i.e. gNB) to implement one or more RAN optimization services. However, these roles may be reversed, and the E2 node 201 may benefit from consuming services produced by the Near-RT RIC 210. Examples of cases where E2 node 201 may benefit from consuming services produced by the Near-RT RIC 210 include:
- RAN analytics information exposure (RAIE) related information based on raw data provided by the E2 node(s) is exposed to an E2 node.
- RAN resident optimization services relying on knowledge of neighbouring cells (physical layer load prediction, channel quality prediction, UE classification, etc.) may collect required data from the Near-RT RIC instead of relying on X2/Xn interfaces.
- Remote procedure calls with the Near-RT RIC 210 performing compute, memory and/or data storage inventive calculations saving local resources for urgent low latency tasks. Applications include near-realtime ML inference and training for RAN optimization.

In the above cases where E2 node may benefit from consuming services produced by the Near-RT RIC include, although the E2 node may be able to locally perform the same analysis and/or data collection mechanisms, this may represent an excessive load on local RAN resources.

Thus an "assistance" or compute offload service is proposed that may be able to avoid duplicate compute loads at multiple base station sites and/or avoid unnecessary Xn based neighboring node collection procedures. This service may be useful, for example, whenever the compute load involved in preparing the request and handling the response is significantly less than the compute load involved in performing the same calculation locally. For classic RAN deployments this may mean that the compute load may be performed on lower cost edge cloud computing platforms compared to performing the same tasks on higher cost remote site equipment.

Functional requirements may require E2 interface specifications to be enhanced to support exposure of RIC services provided by the Near-RT RIC, and to support both individual service requests (e.g. using a request/response mechanism) and initiation of streaming responses (e.g. using a subscription mechanism).

Some example embodiments are described below using principles and terminology of 5G radio access technology without limiting the example embodiments to 5G radio access technology, however.

An embodiment introduces a RIC service "ASSIST" for the E2 interface between the Near-RT RIC and the E2 Node, where the E2 node acts as a service consumer and the Near-RT RIC acts as a service producer. In other words, a RIC service may be provided, where the Near-RT RIC provides "assistance" to the E2 node.

In an embodiment, service discovery inside the Near-RT RIC may provide a mechanism to support xApps registering as service producers for one or more ASSIST services. The service discovery may be used by the Near-RT RIC platform to collect available ASSIST services.

In an embodiment, service discovery over the E2 interface may provide a mechanism to support RIC announcements of available ASSIST services that may be consumed by the E2 node.

In an embodiment, E2 node initiated RIC assistance procedure provides a mechanism that allows the E2 node to request an exposed ASSIST service and receive a corresponding response. Thus, the Near-RT RIC may act as a service producer towards the RAN to provide an assistance service.

In an embodiment, Near-RT RIC initiated subscription for a sequence of RIC assistance procedures may provide a mechanism that allows the Near-RT RIC to set up a RIC subscription for a RIC action type ASSIST which results in the E2 node detecting an event trigger that may be used to initiate the ASSIST request/response service. The E2 node may use a RIC subscription demand request procedure to request that the Near-RT RIC initiates the RIC subscription.

In an embodiment, E2 node initiated RIC assistance procedure with an optional "update request" may provide a mechanism that allows the E2 node to request an exposed ASSIST service and receive a sequence of corresponding update responses each time the Near-RT RIC (i.e. a xApp) determines that the requested assistance information has been updated. Updates may be sent until the E2 node sends a corresponding message to terminate the request. This feature may be usable, for example, when the E2 node is to provide new input data.

In an embodiment, E2 node initiated RIC assistance subscription procedure may provide an alternative mechanism to the RIC assistance procedure with an optional "update request". This feature may be usable, for example, when the Near-RT RIC is requested to provide regular updates for the same input data.

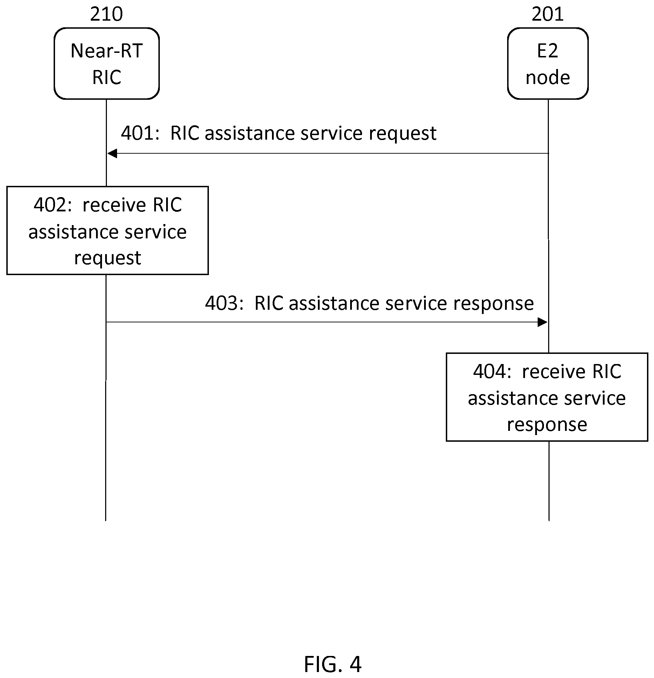

FIG. 4 illustrates a signal flow diagram according to an example embodiment.

Referring to FIG. 4, at 401, an apparatus, such as an E2 node 201, may transmit, to a network device, such as a near-real-time radio access network intelligent controller (Near-RT RIC) 210, a RIC assistance service request message comprising an indication of a RIC assistance service requested by the E2 node 201 from the Near-RT RIC 210. At 402, the Near-RT RIC 210 may receive, from the E2 node 201, the RIC assistance service request message comprising the indication of the RIC assistance service requested by the E2 node 201. In case the requested RIC assistance service is supported by the Near-RT RIC 210 and available by an internal application, xApp, of the Near-RT RIC 210 and/or by a platform service of the Near-RT RIC 210, the Near-RT RIC 210 may, at 403, transmit, to the E2 node 201, a RIC assistance service response message comprising an indication of provision of the requested RIC assistance service by the internal application, xApp, and/or the platform service of the Near-RT RIC 210 to the E2 node 201. At 404, the E2 node 201 may receive, from the Near-RT RIC 210, the RIC assistance service response message comprising the indication of the provision of the RIC assistance service to the E2 node 201 by the internal application, xApp, and/or the platform service of the Near-RT RIC 210.

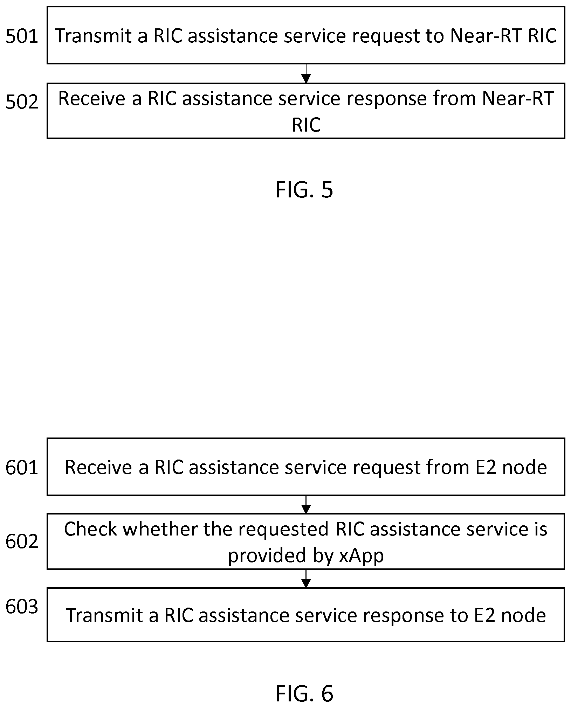

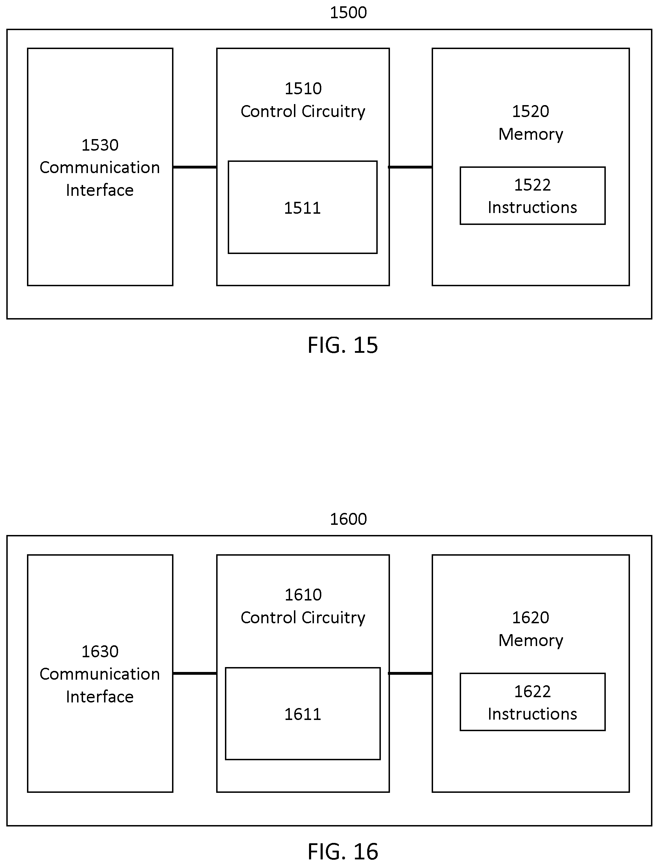

FIG. 5 illustrates a flow chart according to an example embodiment of a method performed by an apparatus 1500 depicted in FIG. 15. For example, the apparatus 1500 may be, or comprise, or be comprised in, a radio access network node 104, 105, 108, or E2 node 201.

Referring to FIG. 5, in block 501, the E2 node 201, may transmit, to the Near-RT RIC 210, a RIC assistance service request message comprising an indication of a RIC assistance service requested by the E2 node 201 from the Near-RT RIC 210. In block 502, the E2 node 201 may receive, from the Near-RT RIC 210, a RIC assistance service response message comprising an indication of provision of the RIC assistance service to the E2 node 201 by an internal application, xApp, of the Near-RT RIC 210 and/or by a platform service of the Near-RT RIC 210.

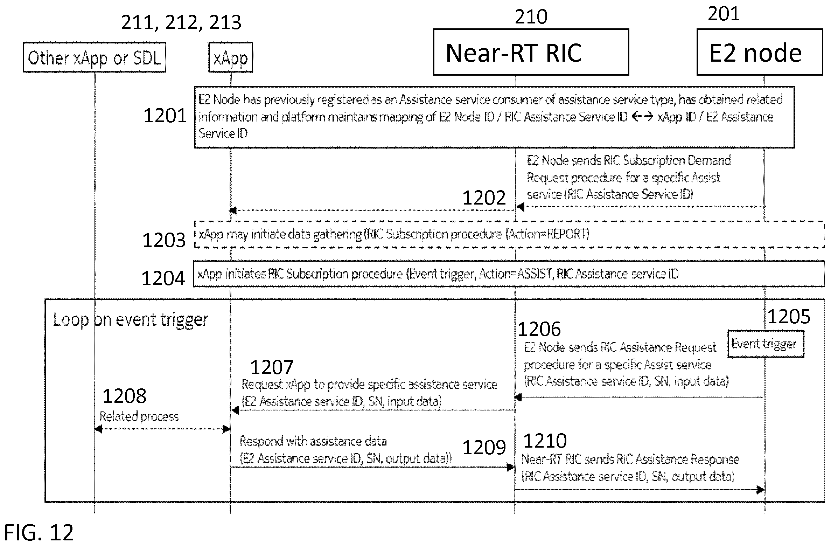

In an embodiment, the E2 node 201 may transmit, to the Near-RT RIC 210, an RIC subscription request message for setting up a subscribed action for a sequence of RIC assistance service procedures, and receive, from the Near-RT RIC 210, an RIC subscription response message indicating whether the subscribed action was admitted. The RIC subscription request message may comprise information on at least one event trigger that triggers in the apparatus the transmission of a RIC assistance service request, wherein the at least one event trigger is related to the RIC assistance service (see also figure 12).

In an embodiment, the RIC assistance service request message may further comprise a request to notify the E2 node 201 each time the internal application, xApp, and/or the platform service of the Near-RT RIC 210 determines that the requested RIC assistance service has been updated, wherein the E2 node 201 may receive, from the Near-RT RIC 210, a corresponding RIC assistance service update message comprising information of an update of the RIC assistance service by the internal application, xApp, and/or the platform service of the Near-RT RIC.

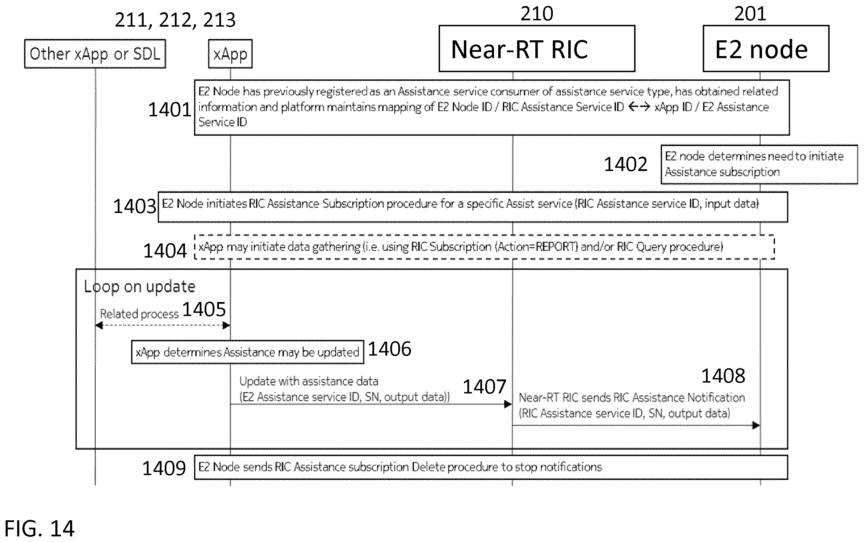

In an embodiment, the E2 node 201 may transmit, to the Near-RT RIC 210, an RIC assistance subscription delete message for requesting the Near-RT RIC to stop transmitting RIC assistance service update messages (see also figure 14).

In an embodiment, the E2 node 201 may transmit, to the Near-RT RIC 210, an inquiry on which RIC assistance service types are available by the internal applications, xApp, of the Near-RT RIC, and receive, from the Near-RT RIC 210, a notification on which RIC assistance service types are available by the internal applications, xApp, of the Near-RT RIC 210.

FIG. 6 illustrates a flow chart according to an example embodiment of a method performed by an apparatus 1600 depicted in FIG. 16. For example, the apparatus 1600 may be, or comprise, or be comprised in, a core network node 110, 111, or a Near-RT RIC 210.

Referring to FIG. 6, in block 601, the Near-RT RIC 210 may receive, from the E2 node 201 of a radio access network, a RIC assistance service request message comprising an indication of a RIC assistance service requested by the E2 node 201. In block 602, the Near-RT RIC 210 may check whether the requested RIC assistance service is provided by an internal application, xApp, of the Near-RT RIC 210 and/or by a platform service of the Near-RT RIC 210. In case the requested RIC assistance service is supported by the Near-RT RIC 210 and available by an internal application, xApp, and/or a platform service of the Near-RT RIC 210, the Near-RT RIC 210 may, in block 603, transmit, to the E2 node 201, a RIC assistance service response message comprising an indication of provision of the requested RIC assistance service by the internal application, xApp, and/or the platform service of the Near-RT RIC 210 to the E2 node 201.

In an embodiment, the Near-RT RIC 210 may receive, from the E2 node 201, a RIC assistance service request message comprising an indication of a RIC assistance service requested by the E2 node. In case the requested RIC assistance service is supported by the Near-RT RIC 210 and available by an internal application, xApp, and/or a platform service of the Near-RT RIC 210, the Near-RT RIC 210 may transmit, to the E2 node 201, a RIC assistance service response message comprising an indication of provision of the requested RIC assistance service by the internal application, xApp, and/or the platform service of the Near-RT RIC 210 to the E2 node 201.

In an embodiment, the Near-RT RIC 210 may receive, from the E2 node 201, an RIC assistance subscription request message for setting up a subscribed action for a sequence of RIC assistance service actions, and transmit, to the E2 node, an RIC assistance subscription response message indicating whether the subscribed action was admitted. The RIC assistance subscription request message may comprise information on at least one event trigger that triggers in the Near-RT RIC the transmission of a RIC assistance notification message containing an update of RIC assistance service information (see also figure 14).

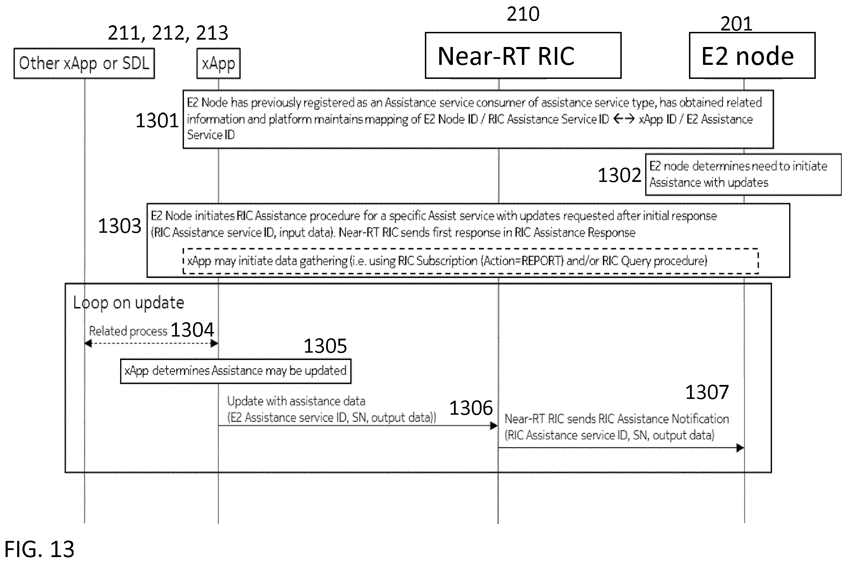

In an embodiment, the RIC assistance service request message may further comprise a request to notify the E2 node 201 each time the internal application, xApp, of the Near-RT RIC 210 determines that the requested RIC assistance service has been updated, wherein the Near-RT RIC 210 may transmit, to the E2 node 201, a corresponding RIC assistance service update message comprising information of an update of the RIC assistance service by the internal application, xApp, and/or the platform service of the Near-RT RIC 210 (see also figure 13).

In an embodiment, the Near-RT RIC 210 may receive, from the E2 node 201, an RIC assistance subscription delete message requesting the Near-RT RIC 210 to stop transmitting RIC assistance notification messages. In response to that, the Near-RT RIC 210 may act accordingly (see also figure 14).

In an embodiment, the Near-RT RIC 210 may collect information on available RIC assistance services in response to the internal application, xApp, of the Near-RT RIC 210 registering as a service producer for the RIC assistance service.

In an embodiment, the Near-RT RIC 210 may collect information on available RIC assistance services, in response to an inquiry received from the E2 node 201 on which RIC assistance service types are available by the internal applications, xApp, of the Near-RT RIC 210, and transmit, to the E2 node, a notification on which RIC assistance service types are available by the internal applications, xApp, of the Near-RT RIC 210.

In an embodiment, the RIC assistance service may comprise one or more of: RAN analytics information exposure (RAIE), RAN resident optimization, or remote procedure call.

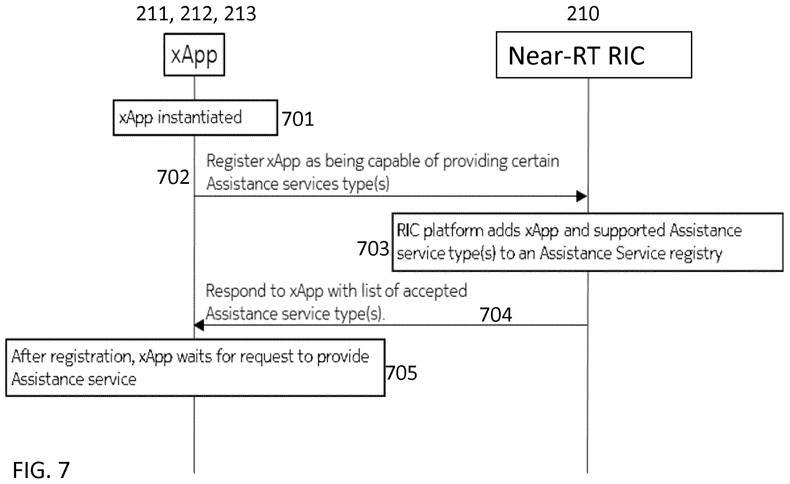

FIG. 7 illustrates a signal flow diagram according to an example embodiment. Service discovery inside the Near-RT RIC 210 may involve catalog based registration. The internal application, xApp 211, 212, 213, of the Near-RT RIC 210, may publish a list of assistance service types for one or more RAN types (4G, 5G, etc.) that it is capable of providing to consumers. The Near-RT RIC may store corresponding information for future use. Referring to FIG. 7, in item 701, the signalling may be initiated by the xApp. In item 702, the xApp may register the Near-RT RIC 210 as capable of providing certain assistance service type(s). In item 703, the Near-RT RIC 210 may add/store the xApp and supported assistance service type(s) to an assistance service registry. In item 704, the Near-RT RIC 210 may respond to the xApp with a list of accepted/supported assistance service type(s). In item 705, after the registration, the xApp may wait for a request to provide the assistance service.

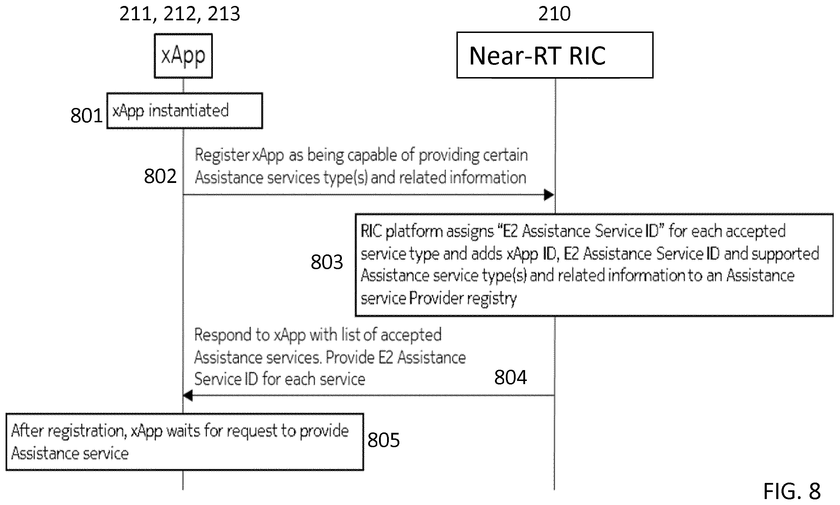

FIG. 8 illustrates a signal flow diagram according to an example embodiment. Service discovery inside the Near-RT RIC may involve service based registration. The internal application, xApp 211, 212, 213, of the Near-RT RIC 210, may propose a list of specific assistance service type(s) and related information. The Near-RT RIC 210 may select one or more of the proposed services and assign a unique identification "E2 assistance service ID". Referring to FIG. 8, in item 801, the signalling may be initiated by the xApp. In item 802, the xApp may register to the Near-RT RIC 210 as capable of providing certain assistance service type(s). In item 803, the Near-RT RIC 210 may assign an E2 assistance service ID for each accepted service type and add/store the xApp identification, E2 assistance service ID, and related information to an assistance service provider registry. In item 804, the Near-RT RIC 210 may respond to the xApp with a list of accepted/supported assistance services, and provide an E2 assistance service ID for each service. In item 805, after the registration, the xApp may wait for a request to provide the assistance service.

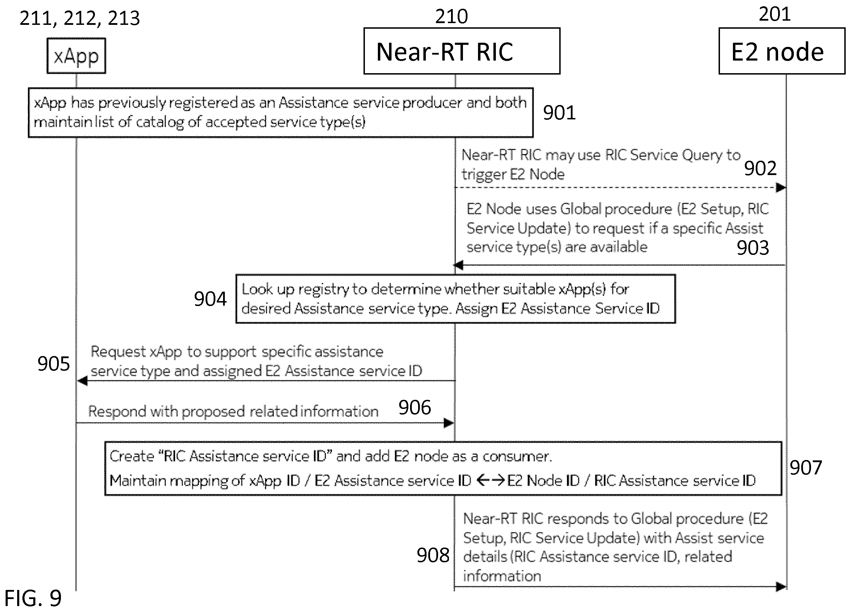

FIG. 9 illustrates a signal flow diagram according to an example embodiment. Service discovery on the E2 interface may involve catalog based registration. This may be based on the catalog based registration approach presented in Figure 7. The E2 node may use an extension of E2 SETUP and/or RIC service update to request a range of specific assistance service types, and the Near-RT RIC 210 may perform a selection from the list of previously registered xApp producers to provide these services. The E2 assistance service IDs may be selected during this procedure by the Near-RT RIC 210, maintaining mapping between {xApp ID, E2 assistance service ID} used over RIC APIs and {E2 node ID, RIC assistance service ID} used over the E2 interface. Referring to FIG. 9, in item 901, the xApp has previously been registered as an assistance service producer and both the xApp and the Near-RT RIC 210 maintain a list or catalog of accepted assistance service types. In item 902, the Near-RT RIC 210 may optionally use a RIC service query to trigger the E2 node. In item 903, the E2 node may use a global procedure, such as the E2 SETUP and/or RIC service update, to request from the Near-RT RIC 210, if specific assistance service type(s) is (are) available. In item 904, the Near-RT RIC 210 may check whether suitable xApp(s) for the requested assistance service type(s) is (are) available/exist, and assign a corresponding E2 assistance service ID. In item 905, the Near-RT RIC 210 may request the xApp to support the specific assistance service type and the assigned E2 assistance service ID, and in item 906, the Near-RT RIC 210 may receive a corresponding response from the xApp and proposed related information. In item 907, the Near-RT RIC 210 may create an RIC assistance service ID and add/store the E2 node as a service consumer, wherein the mapping between xApp ID/E2 assistance service ID and E2 node ID/RIC assistance service ID may be maintained. In item 908, the Near-RT RIC 210 may respond to the global procedure (i.e. E2 setup, RIC service update) with assistance service details, such as RIC assistance service ID and related information.

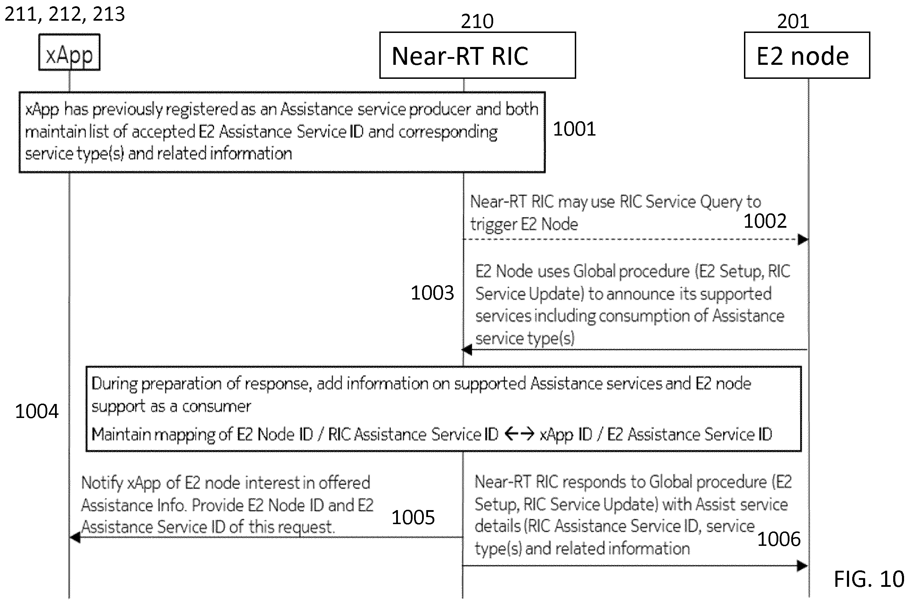

FIG. 10 illustrates a signal flow diagram according to an example embodiment. Service discovery on the E2 interface may involve service based registration. This may be based on the service based registration approach presented above in Figure 8. The E2 node 201 may use an extension of E2 SETUP and/or RIC service update to request a range of specific assistance service types, and the Near-RT RIC may perform selection from the list of previously registered E2 assistance service IDs to provide these services. During this procedure the Near-RT RIC 210 may maintain mapping between {xApp ID, E2 assistance service ID} used over the RIC APIs and {E2 node ID, RIC assistance service ID} used over the E2 interface. Referring to FIG. 10, in item 1001, the xApp has previously been registered as an assistance service producer and both the xApp and the Near-RT RIC 210 maintain a list of accepted E2 assistance service IDs, corresponding service type(s) and related information. In item 1002, the Near-RT RIC 210 may optionally use a RIC service query to trigger the E2 node. In item 1003, the E2 node may use a global procedure, such as the E2 SETUP and/or RIC service update, to announce services supported by the E2 node, including consumption of assistance service type(s). In item 1004, during preparation of a response the Near-RT RIC 210 add/store information on supported assistance service and the E2 node as a service consumer, wherein the mapping between xApp ID/E2 assistance service ID and E2 node ID/RIC assistance service ID may be maintained. In item 1005, the Near-RT RIC 210 may notify the xApp that the E2 node has an interest on offered assistance information, wherein the E2 node ID and E2 assistance service ID related to the notification/request are provided to the xApp. In item 1006, the Near-RT RIC 210 may respond to the global procedure (E2 SETUP and/or RIC service update) with assistance service details, such as RIC assistance service ID, service type(s) and related information.

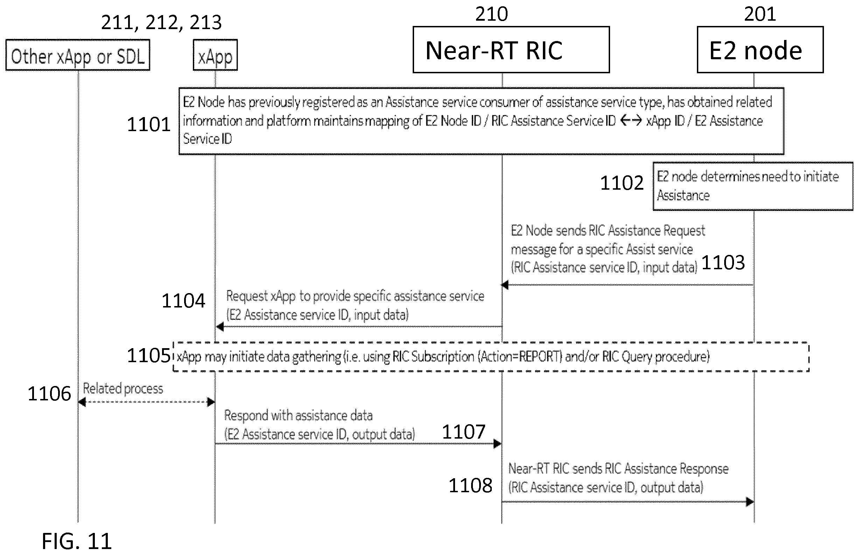

FIG. 11 illustrates a signal flow diagram according to an example embodiment. An assistance service procedure may involve an E2 node initiated assistance request/response. This may involve a service provided by the Near-RT RIC, with the E2 node initiating the request/response based procedure. The xApp providing the service may initiate data gathering and analysis processes prior to preparing the response. The E2 node may include service specific input data. Referring to FIG. 11, in item 1101, the E2 node 201 may have previously registered as an assistance service consumer of an assistance service type and obtained related information, and the Near-RT RIC 210 may maintain mapping between the E2 node ID/RIC assistance service ID and xApp ID/E2 assistance service ID. In item 1102, the E2 node may determine a need to initiate assistance. In item 1103, the E2 node may send, to the Near-RT RIC 210, a RIC assistance request message for a specific assistance service, wherein the message 1103 may include the RIC assistance service ID and input data. In item 1104, the Near-RT RIC 210 may request an xApp to the specific assistance service and inform the xApp on the corresponding E2 assistance service ID and input data. In item 1105, the xApp may initiate data gathering with the Near-RT RIC and the E2 node, by using a RIC subscription (action=report) and/or RIC query procedure. The assistance service procedure may involve a related process 1106 with at least one other xApp and/or information stored in the Near-RT RIC platform shared data layer (SDL). In item 1107, the Near-RT RIC may receive a response from the xApp including assistance data, such as the E2 assistance service ID and output data. In item 1108, the Near-RT RIC may send, to the E2 node, a RIC assistance response including the RIC assistance service ID and output data.

FIG. 12 illustrates a signal flow diagram according to an example embodiment. An assistance service procedure may involve a near-RT RIC initiated subscription for a sequence of RIC assistance procedures. This service may use the basic service provided by the Near-RT RIC with the E2 node initiating the request/response based procedure as a new RIC action type within an existing RIC subscription procedure, as described in Figure 11. A resulting service may be initiated by the xApp with an event trigger installed in the E2 node. Since the xApp may initiate the overall process, the xApp is able to prepare beforehand, and so the xApp may initiate data gathering and analysis processes prior to preparing the subscription request, rather than each time the E2 node issues the RIC assistance request. The Near-RT RIC initiated subscription for the sequence of RIC assistance procedures may be initiated as a response to a demand from the E2 node. Referring to FIG. 12, at 1201, the E2 node 201 may have previously registered as an assistance service consumer of an assistance service type and obtained related information, and the Near-RT RIC 210 may maintain mapping between the E2 node ID/RIC assistance service ID and xApp ID/E2 assistance service ID. In item 1202, a RIC subscription demand message/procedure for a specific assistance service, may be sent from the E2 node via the Near-RT RIC towards the xApp. In item 1203, the xApp may initiate data gathering with the Near-RT RIC and the E2 node, by using a RIC subscription (action=REPORT) and/or RIC query procedure. In item 1204, the xApp may initiate a RIC subscription procedure with the near-RT RIC and the E2 node, using an event trigger, where action=ASSIST, and using a RIC assistance service ID. In item 1205, the event trigger which is installed in the E2 node may be triggered which may start a loop (items 1206 to 1210). In item 1206, the E2 node may send, to the Near-RT RIC 210, a RIC assistance request procedure for a specific assistance service, including the RIC assistance service ID, sequence number (SN) and input data. In item 1207, the Near-RT RIC 210 may request the xApp to provide the specific assistance service, by indicating the E2 assistance service ID, sequence number (SN) and input data. The assistance service procedure may involve a related process 1208 with at least one other xApp or shared data layer (SDL). In item 1209, the Near-RT RIC 210 may receive a response from the xApp including assistance data, such as the E2 assistance service ID, sequence number (SN) and output data. In item 1210, the Near-RT RIC 210 may send, to the E2 node 201, a RIC assistance response including the RIC assistance service ID, sequence number (SN) and output data.

FIG. 13 illustrates a signal flow diagram according to an example embodiment. An assistance service procedure may involve an E2 node initiated request/response with optional subsequent updates. This service is a variant of the service provided by the Near-RT RIC shown in Figure 11 with the E2 node initiating the request/response based procedure. In Figure 13, the E2 node uses an optional feature in the request message to also request subsequent updates to the first response. Since the xApp providing the service may have initiated data gathering and analysis processes prior to preparing the first response, this preparation task needs not be repeated for each update. Referring to FIG.13, in item 1301, the E2 node 201 may have previously registered as an assistance service consumer of an assistance service type and obtained related information, and the Near-RT RIC 210 may maintain mapping between the E2 node ID/RIC assistance service ID and xApp ID/E2 assistance service ID. In item 1302, the E2 node may determine a need to initiate assistance with updates. In item 1303, the E2 node may initiate the RIC assistance procedure (with RIC assistance service ID and input data) towards the Near-RT RIC/xApp for a specific assistance service with updates requested after initial response, and the xApp may initiate data gathering with the Near-RT RIC and the E2 node, by using a RIC subscription (action=report) and/or RIC query procedure. The assistance service procedure may involve a related process 1304 with at least one other xApp or shared data layer (SDL). In item 1305, the xApp may determine that the assistance service may be updated. In item 1306, the Near-RT RIC may receive an update from the xApp including assistance data, such as the E2 assistance service ID, sequence number (SN) and output data. In item 1307, the Near-RT RIC may send, to the E2 node, a RIC assistance notification including the RIC assistance service ID, sequence number (SN) and output data. Items 1304 to 1307 may be performed as a loop.

FIG. 14 illustrates a signal flow diagram according to an example embodiment. An assistance service procedure may involve an E2 node initiated subscription with subsequent notifications. This may be an alternative mechanism to the procedure presented in Figure 13. In Figure 14, the E2 node initiated assistance subscription procedure may have an event trigger installed in the xApp which generates a sequence of notification messages to the E2 Node. Referring to FIG. 14, in item 1401, the E2 node 201 may have previously registered as an assistance service consumer of an assistance service type and obtained related information, and the Near-RT RIC 210 may maintain mapping between the E2 node ID/RIC assistance service ID and xApp ID/E2 assistance service ID. In item 1402, the E2 node may determine a need to initiate assistance subscription. In item 1403, the E2 node may initiate the RIC assistance subscription procedure towards the Near-RT RIC/xApp for a specific assistance service, with RIC assistance service ID and input data. In item 1404, the xApp may initiate data gathering with the Near-RT RIC and the E2 node, by using a RIC subscription (action=report) and/or RIC query procedure. The assistance service procedure may involve a related process 1405 with at least one other xApp or shared data layer (SDL). In item 1406, the xApp may determine that the assistance service may be updated. In item 1407, the Near-RT RIC may receive an update from the xApp including assistance data, such as the E2 assistance service ID, sequence number (SN) and output data. In item 1408, the Near-RT RIC may send, to the E2 node, a RIC assistance notification including the RIC assistance service ID, sequence number (SN) and output data. Items 1405 to 1408 may be performed as a loop. In item 1409, the E2 node may send a RIC assistance subscription procedure message to the Near-RT RIC/xApp to stop the notification(s), i.e. to stop the Near-RT RIC sending messages 1408, which stops the loop.

The blocks, related functions, and information exchanges (messages) described above by means of FIGS. 2-14 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The usual RIC services are based on the Near-RT RIC acting as the service consumer and using the service(s) produced by the E2 node (i.e. a gNB), to implement one or more RAN optimization services. There are, however, situations where the roles may be reversed, and the E2 node may benefit from consuming services produced by the Near-RT RIC. The E2 node may be able to locally perform the same analysis and/or data collection mechanisms locally. This may represent an excessive load on local RAN resources. Therefore, an "assistance" or compute offload service is proposed that enables to avoid duplicate compute loads at multiple base station sites and/or avoid unnecessary Xn based neighbouring node collection procedures.

FIG. 15 illustrates an example of an apparatus 1500 comprising means for performing one or more of the example embodiments described above. For example, the apparatus 1500 may be, or comprise, or be comprised in, an E2 node 201, or a radio access network node 104, 104B, 104C or a distributed unit 105, 105B or a central unit 108, 108B.

The apparatus 1500 may comprise, for example, a circuitry or a chipset applicable for realizing one or more of the example embodiments described above. The apparatus 1500 may be an electronic device comprising one or more electronic circuitries. The apparatus 1500 may comprise a communication control circuitry 1510 such as at least one processor, and at least one memory 1520 storing instructions 1522 which, when executed by the at least one processor, cause the apparatus 1500 to carry out one or more of the example embodiments described above. Such instructions 1522 may, for example, include computer program code (software). The at least one processor and the at least one memory storing the instructions may provide the means for providing or causing the performance of any of the methods and/or blocks described above. The control circuitry 1510 may comprise an assist request circuitry 1511 to cause the apparatus to request assistance service as described above.

The processor is coupled to the memory 1520. The processor is configured to read and write data to and from the memory 1520. The memory 1520 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1520 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1520 or, alternatively or additionally, they may be received, by the apparatus, via an electromagnetic carrier signal and/or may be copied from a physical entity such as a computer program product. Execution of the computer readable instructions causes the apparatus 1500 to perform one or more of the functionalities described above.

The memory 1520 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1500 may further comprise or be connected to a communication interface 1530, such as a radio unit, comprising hardware and/or software for realizing communication connectivity with one or more wireless communication devices according to one or more communication protocols. The communication interface 1530 comprises at least one transmitter (Tx) and at least one receiver (Rx) that may be integrated to the apparatus 1500 or that the apparatus 1500 may be connected to. The communication interface 1530 may provide means for performing some of the blocks for one or more example embodiments described above. The communication interface 1530 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1530 provides the apparatus with radio communication capabilities to communicate in the wireless communication network. The communication interface may, for example, provide a radio interface to one or more UEs 100, 102. The apparatus 1500 may further comprise or be connected to another interface towards a core network 110, such as the network coordinator apparatus or AMF 111, and/or to the access nodes 104 of the wireless communication network.

It is to be noted that the apparatus 1500 may further comprise various components not illustrated in FIG. 15. The various components may be hardware components and/or software components.

In an embodiment, the E2 node transmits, to the Near-RT RIC, a RIC assistance service request message comprising an indication of a RIC assistance service requested by the E2 node from the Near-RT RIC, and receives, from the Near-RT RIC, a RIC assistance service response message comprising an indication of provision of the RIC assistance service by an internal application, xApp, of the Near-RT RIC and/or by a platform service of the Near-RT RIC, to the E2 node.

In an embodiment, the E2 node may transmit, to the Near-RT RIC, an RIC assistance subscription request message for setting up a subscribed action for a sequence of RIC service procedures including one or more RIC Assistance service actions, and receive, from the Near-RT RIC, an RIC assistance subscription response message indicating whether the subscribed action was admitted, wherein the RIC assistance subscription request message comprises information on at least one event trigger that triggers in the Near-RT RIC the transmission of a notification message containing an update to the subscribed assistance information.

In an embodiment, the RIC assistance service request message further comprises a request to notify the E2 node each time the internal application, xApp, and/or the platform service of the Near-RT RIC determines that the requested near-RT RIC assistance service has been updated, wherein the E2 node may further receive, from the Near-RT RIC, a corresponding RIC assistance service notification message comprising information of an update of the RIC assistance service by the internal application, xApp, and/or the platform service of the Near-RT RIC.

In an embodiment, the E2 may transmit, to the Near-RT RIC, an RIC assistance subscription delete message for requesting the Near-RT RIC to stop transmitting RIC assistance service notification messages.

In an embodiment, the E2 node may transmit, to the Near-RT RIC, an inquiry on which RIC assistance service types are available by the internal applications, xApp, of the Near-RT RIC, and receive, from the Near-RT RIC, a notification on which RIC assistance service types are available by the internal applications, xApp, of the Near-RT RIC.

In an embodiment, the E2 node may receive, from the Near-RT RIC, a RIC subscription request message for setting up a subscribed action for a sequence of RIC service procedures including one or more RIC assistance service actions, and transmit, to the Near-RT RIC, an RIC subscription response message indicating whether the subscribed action was admitted, wherein the RIC subscription request message comprises information on at least one event trigger that triggers in the apparatus the transmission of a sequence of RIC service actions, wherein the at least one RIC service action is related to the RIC assistance service.

FIG. 16 illustrates an example of an apparatus 1600 of a core network 110, the apparatus 1600 comprising means for performing one or more of the example embodiments described above. For example, the means may be a near-real-time radio access network intelligent controller (Near-RT RIC) 210, or an access and mobility management function (AMF) of the core network 110 or the means may be network function virtualization infrastructure.

The apparatus 1600 may comprise, for example, a circuitry or a chipset applicable for realizing one or more of the example embodiments described above. The apparatus 1600 may be an electronic device or computing system comprising one or more electronic circuitries. The apparatus 1600 may comprise a control circuitry 1610 such as at least one processor, and at least one memory 1620 storing instructions 1622 which, when executed by the at least one processor, cause the apparatus 1600 to carry out one or more of the example embodiments described above. Such instructions 1622 may, for example, include computer program code (software). The at least one processor and the at least one memory storing the instructions may provide the means for providing or causing the performance of any of the methods and/or blocks described above. The control circuitry 1610 may comprise an assist response circuitry 1611 to cause the apparatus to receive assistance service request and transmit an assistance service response as described above.

The processor is coupled to the memory 1620. The processor is configured to read and write data to and from the memory 1620. The memory 1620 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1620 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1620 or, alternatively or additionally, they may be received, by the apparatus, via an electromagnetic carrier signal and/or may be copied from a physical entity such as a computer program product. Execution of the computer readable instructions causes the apparatus 1600 to perform one or more of the functionalities described above.

The memory 1620 may be implemented using any suitable data storage technology, such as semiconductor-based memory devices, flash memory, magnetic memory devices and systems, optical memory devices and systems, fixed memory and/or removable memory.

The apparatus 1600 may further comprise or be connected to a communication interface 1630 comprising hardware and/or software for realizing communication connectivity according to one or more communication protocols. The communication interface 1630 may comprise at least one transmitter (Tx) and at least one receiver (Rx) that may be integrated to the apparatus 1600 or that the apparatus 1600 may be connected to. The communication interface 1630 may provide means for performing some of the blocks for one or more example embodiments described above. The communication interface 1630 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1630 provides the apparatus with communication capabilities to communicate in the wireless communication network. The communication interface 1630 may, for example, provide a radio, cable or fiber interface to one or more network nodes 201, 104 of a radio access network.

It is to be noted that the apparatus 1600 may further comprise various components not illustrated in FIG. 16. The various components may be hardware components and/or software components.

In an embodiment, the Near-RT RIC receives, from the E2 node, a RIC assistance service request message comprising an indication of a RIC assistance service requested by the E2 node, wherein in case the requested RIC assistance service is supported by the Near-RT RIC and available by an internal application, xApp, of the Near-RT RIC, the Near-RT RIC transmits, to the E2 node, a RIC assistance service response message comprising an indication of provision of the requested RIC assistance service by the internal application, xApp, of the Near-RT RIC and/or the platform service of the Near-RT RIC, to the E2 node.

In an embodiment, the Near-RT RIC may comprise a near-real-time radio access network intelligent controller platform and/or one or more internal applications, xApp. In an embodiment, the platform service may be provided by the near-real-time radio access network intelligent controller platform.

In an embodiment, the Near-RT RIC may receive, from the E2 node, an RIC assistance subscription request message for setting up a subscribed action for a sequence of RIC assistance service notification messages, and transmit, to the E2 node, an RIC assistance subscription response message indicating whether the subscribed action was admitted, wherein the RIC assistance subscription request message comprises information on at least one event trigger that triggers in the Near-RT RIC the transmission of a RIC assistance notification messages.

In an embodiment, the RIC assistance service request message further comprises a request to notify the E2 node each time the internal application, xApp, of the Near-RT RIC determines that the requested RIC assistance service has been updated, wherein the Near-RT RIC may transmit, to the E2 node, a corresponding RIC assistance notification message comprising information of an update of the RIC assistance service by the internal application, xApp, and/or the platform service of the Near-RT RIC.

In an embodiment, the Near-RT RIC may receive, from the E2 node, an RIC assistance subscription delete message requesting the Near-RT RIC to stop transmitting RIC assistance notification messages.

In an embodiment, the Near-RT RIC may collect information on available RIC assistance services in response to the internal application, xApp, of the Near-RT RIC registering as a service producer for the RIC assistance service.

In an embodiment, the Near-RT RIC may collect information on available RIC assistance services, in response to an inquiry received from the E2 node on which RIC assistance service types are available by the internal applications, xApp, of the Near-RT RIC, and transmit, to the E2 node, a notification on which RIC assistance service types are available by the internal applications, xApp, of the Near-RT RIC.

In an embodiment, the Near-RT RIC may transmit, to the E2 node, an RIC subscription request message for setting up a subscribed action for a sequence of RIC service procedures including one or more RIC assistance service actions, and receive, from the E2 node, an RIC subscription response message indicating whether the subscribed action was admitted, wherein the RIC subscription request message comprises information on at least one event trigger that triggers in the E2 node the transmission of a sequence of RIC service actions, wherein the at least one RIC service action is related to the RIC assistance service.

The present subject matter may comprise the following clauses.

Clause 1. A method comprising: receiving, by an apparatus from an E2 node of a radio access network, a RIC assistance service request message comprising an indication of a RIC assistance service requested by the E2 node; wherein in case the requested RIC assistance service is supported by the apparatus and available by at least one of an internal application, xApp, or a platform service of the apparatus, the method further comprises transmitting, from the apparatus to the E2 node, a RIC assistance service response message comprising an indication of provision of the requested RIC assistance service by the at least one of the internal application, xApp, or the platform service of the apparatus to the E2 node.

Clause 2. A non-transitory computer readable medium comprising program instructions which, when executed by an apparatus, cause the apparatus to perform at least the following: transmit, to a near-real-time radio access network intelligent controller (Near-RT RIC), a RIC assistance service request message comprising an indication of a RIC assistance service requested by the apparatus from the near-real-time radio access network intelligent controller; and receive, from the near-real-time radio access network intelligent controller, a RIC assistance service response message comprising an indication of provision of the RIC assistance service by at least one of an internal application, xApp, or a platform service of the near-real-time radio access network intelligent controller to the apparatus.

Clause 3. A non-transitory computer readable medium comprising program instructions which, when executed by an apparatus, cause the apparatus to perform at least the following: receive, from an E2 node of a radio access network, a RIC assistance service request message comprising an indication of a RIC assistance service requested by the E2 node; wherein in case the requested RIC assistance service is supported by the apparatus and available by at least one of an internal application, xApp, or a platform service of the apparatus, the apparatus is further caused to transmit, to the E2 node, a RIC assistance service response message comprising an indication of provision of the requested RIC assistance service by the at least one of the internal application, xApp, or the platform service of the apparatus to the E2 node.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus of an E2 node, the apparatus comprising at least one processor, and at least one memory storing instructions that, when executed by the at least one processor, cause the apparatus at least to:
transmit, to a near-real-time radio access network intelligent controller (Near-RT RIC), a RIC assistance service request message comprising an indication of a RIC assistance service requested by the apparatus from the near-real-time radio access network intelligent controller; and
receive, from the near-real-time radio access network intelligent controller, a RIC assistance service response message comprising an indication of provision of the RIC assistance service by at least one of an internal application, xApp, or a platform service of the near-real-time radio access network intelligent controller to the apparatus.

2. The apparatus according to claim 1, further being caused to:
transmit, to the near-real-time radio access network intelligent controller, an RIC assistance subscription request message for setting up a subscribed action for a sequence of RIC service procedures including one or more RIC Assistance service actions; and
receive, from the near-real-time radio access network intelligent controller, an RIC assistance subscription response message indicating whether the subscribed action was admitted;
wherein the RIC assistance subscription request message comprises information on at least one event trigger that triggers in the near-real-time radio access network intelligent controller the transmission of a notification message containing an update to the subscribed assistance information.

3. The apparatus according to claim 1 or 2,
wherein the RIC assistance service request message further comprises a request to notify the apparatus each time the at least one of the internal application, xApp, or the platform service of the near-real-time radio access network intelligent controller determines that the requested near-RT RIC assistance service has been updated,
the apparatus further being caused to
receive, from the near-real-time radio access network intelligent controller, a corresponding RIC assistance service notification message comprising information of an update of the RIC assistance service by the at least one of the internal application, xApp, or the platform service of the near-real-time radio access network intelligent controller.

4. The apparatus according to any preceding claim, further being caused to:
transmit, to the near-real-time radio access network intelligent controller, an RIC assistance subscription delete message for requesting the near-real-time radio access network intelligent controller to stop transmitting RIC assistance service notification messages.

5. The apparatus according to any preceding claim, further being caused to:
transmit, to the near-real-time radio access network intelligent controller, an inquiry on which RIC assistance service types are available by the internal applications, xApp, of the near-real-time radio access network intelligent controller; and
receive, from the near-real-time radio access network intelligent controller, a notification on which RIC assistance service types are available by the internal applications, xApp, of the near-real-time radio access network intelligent controller.

6. The apparatus according to any preceding claim, further being caused to:
receive, from the near-real-time radio access network intelligent controller, a RIC subscription request message for setting up a subscribed action for a sequence of RIC service procedures including one or more RIC assistance service actions;
transmit, to the near-real-time radio access network intelligent controller, an RIC subscription response message indicating whether the subscribed action was admitted;
wherein the RIC subscription request message comprises information on at least one event trigger that triggers in the apparatus the transmission of a sequence of RIC service actions, wherein the at least one RIC service action is related to the RIC assistance service.

7. An apparatus comprising at least one processor, and at least one memory storing instructions that, when executed by the at least one processor, cause the apparatus at least to:
receive, from an E2 node of a radio access network, a RIC assistance service request message comprising an indication of a RIC assistance service requested by the E2 node;
wherein in case the requested RIC assistance service is supported by the apparatus and available by at least one of an internal application, xApp, or a platform service of the apparatus, the apparatus is further caused to
transmit, to the E2 node, a RIC assistance service response message comprising an indication of provision of the requested RIC assistance service by the at least one of the internal application, xApp, or the platform service of the apparatus to the E2 node.

8. The apparatus according to claim 7, further being caused to:
receive, from the E2 node, an RIC assistance subscription request message for setting up a subscribed action for a sequence of RIC assistance service notification messages; and
transmit, to the E2 node, an RIC assistance subscription response message indicating whether the subscribed action was admitted;
wherein the RIC assistance subscription request message comprises information on at least one event trigger that triggers in the apparatus the transmission of a RIC assistance notification messages.

9. The apparatus according to claim 7 or 8,
wherein the RIC assistance service request message further comprises a request to notify the E2 node each time the internal application, xApp, of the apparatus determines that the requested RIC assistance service has been updated,
the apparatus further being caused to
transmit, to the E2 node, a corresponding RIC assistance notification message comprising information of an update of the RIC assistance service by the at least one of the internal application, xApp, or the platform service of the apparatus.

10. The apparatus according to claim 7, 8 or 9, further being caused to:
receive, from the E2 node, an RIC assistance subscription delete message requesting the apparatus to stop transmitting RIC assistance notification messages.

11. The apparatus according to any preceding claim 7 to 10, further being caused to:
collect information on available RIC assistance services in response to the internal application, xApp, of the apparatus registering as a service producer for the RIC assistance service.

12. The apparatus according to any preceding claim 7 to 11, further being caused to:
collect information on available RIC assistance services, in response to an inquiry received from the E2 node on which RIC assistance service types are available by the internal applications, xApp, of the apparatus; and
transmit, to the E2 node, a notification on which RIC assistance service types are available by the internal applications, xApp, of the apparatus.

13. The apparatus according to any preceding claim 7 to 12, further being caused to:
transmit, to the E2 node, an RIC subscription request message for setting up a subscribed action for a sequence of RIC service procedures including one or more RIC assistance service actions; and
receive, from the E2 node, an RIC subscription response message indicating whether the subscribed action was admitted;
wherein the RIC subscription request message comprises information on at least one event trigger that triggers in the E2 node the transmission of a sequence of RIC service actions, wherein the at least one RIC service action is related to the RIC assistance service.

14. The apparatus according to any preceding claim 7 to 13, wherein the apparatus comprises, or is comprised in, a near-real-time radio access network intelligent controller.

15. The apparatus according to any preceding claim, wherein the RIC assistance service comprises one or more of:
- RAN analytics information exposure, RAIE,
- RAN resident optimization, or
- remote procedure call.

16. A method comprising:
transmitting, from an apparatus to a near-real-time radio access network intelligent controller (Near-RT RIC), a RIC assistance service request message comprising an indication of a RIC assistance service requested by the apparatus from the near-real-time radio access network intelligent controller; and
receiving, by the apparatus from the near-real-time radio access network intelligent controller, a RIC assistance service response message comprising an indication of provision of the RIC assistance service by at least one of an internal application, xApp, or a platform service of the near-real-time radio access network intelligent controller to the apparatus.
